# EUROPEAN PATENT APPLICATION

(11) **EP 3 382 542 A1**
(43) Date of publication of application: **03.10.2018**
(21) Application number: 17163787.9
(22) Date of filing: 30.03.2017
(51) Int. Cl.: G06F 9/50, H04L 29/08, H04W 28/08, H04L 12/801, H04L 12/803

(54) **ALLOCATING PROCESSING REQUESTS BETWEEN SERVERS**

(71) Applicant: British Telecommunications public limited company, London EC1A 7AJ (GB)
(72) Inventor: The designation of the inventor has not yet been filed
(74) Representative: British Telecommunications public limited company Intellectual Property Department

(57) **Abstract**

Methods and apparatus are disclosed for allocating processing requests between a plurality of servers (16a, 16b, 16i), each processing request being a request from a client processor (10a, 10b, 10n) for processing to be performed by a server. The method and apparatus involve a load-balancing module (13) and an associated load-monitoring module (14) interacting with each other and with the plurality of servers. The load-monitoring module (14) is configured to receive processing responses from the servers, identify codepoints in predetermined fields thereof, and to interpret them according to a server processing capacity signalling protocol. The load-balancing module (13) is configured to receive processing requests submitted by the client processors and to forward them for processing at a server selected in dependence on the interpretation according to the server processing capacity signalling protocol of the codepoints in the predetermined fields of processing responses previously received from the respective servers.

## Description

### Technical Field

The present invention relates to methods and apparatus for allocating processing requests received from client computers or other such processors between processing servers such as digital content provision servers or other such web servers, application servers, etc.

### Background

Many connections over the internet involve a request from a networked client computer or other such user device for a server or other such processing computer to perform some kind of processing or other task, such as to stream a film, perform a web search, set up a real-world transaction (such as the purchase of an item), etc. Performing such tasks involves use of resources on the processing server (or other such processing computer) such as processing capacity and /or memory. If the server is short of any such resources, it may reject or fail to meet the request, or encounter problems which may lead to it rejecting or failing to meet other requests. To prevent a server from being overwhelmed by repeat requests, it may implement a technique for slowing-down or rejecting requests, preferably without consuming significant resource in implementing the rejection (this is of particular importance when dealing with "Denial of Service" attacks), often using some device 'in front of' the server.

In the context of a data centre (i.e. a site having a number of servers), a typical arrangement is for a load balancer, at the ingress of the data centre, to share out processing requests amongst several 'back-end' servers. There are many different ways in which a load balancer may perform the sharing, for example "round robin", random or other static schemes, to dynamic schemes that take account of the conditions on each server, some of which involve the load balancer monitoring how many requests it has sent to each server (possibly also taking account of how long or how much processing capacity each request should take). Others involve the load balancer sending a "ping" or other such "test" request to each server (which may be a traditional ICMP network ping, but may be an application-layer ping) which is essentially a request for service, so if the server responds, that indicates that it still has (or had) available resources/capacity to respond to a request for service.

Generally, load balancing may be regarded as a generic term for a number of techniques for distributing network or application traffic between possible processing servers. Load balancing may be done for any of a number of reasons, such as to improve the overall responsiveness of the servers and/or to increase the availability of the applications they provide, providing such improvements by balancing application requests across multiple servers in order to reduce the load on individual servers and to prevent any one server from becoming a single point of failure for an application, thereby improving overall application availability and responsiveness.

A load balancer is generally located between a client and a set of possible servers (sometimes referred to as a "server farm"). It receives incoming network and application traffic and distributes it between the possible servers. If one application server is unavailable, the load balancer will direct new requests in respect of the application in question to other available application servers.

As indicated above, various load balancing methods or algorithms are known which have different criteria, aims, behaviour and benefits, including the following:
- The Least Connection Method: In this, a new request is sent to the server with the fewest current connections to clients. The relative computing capacity of each server may be factored into determining which one has the fewest active connections.
- The Round Robin Method: In this, requests are distributed across a group of servers sequentially, thereby rotating through a list of servers from a first to a last before returning to the first and repeating the cycle.
- The Least Response Time Method: In this, a load balancer selects the server with the fewest active connections and the lowest average response time.
- The Least Bandwidth Method: In this, a load balancer selects the server that is currently serving the least amount of traffic, which can be measured in megabits per second (Mbps).
- The Least Packets Method: In this, a load balancer selects the server that has received the fewest packets over a specified period of time.
- The Custom Load Method: In this, a load balancer selects a server that is not handling any active transactions. If all of the possible servers are handling active transactions, the server with the smallest load is selected.

Other factors may be taken into account. In the "IP Hash" method, the IP address of the client is used to determine which server should receive a particular request, for example.

An issue where load balancing is used is how to handle information that must be kept across multiple requests in a user's session (for example, for on-line banking). A typical solution is called "persistence" or "stickiness" or "server affinity" - if necessary, this can be used to ensure that the multiple requests from the client in the session go to the same server.

Turning now to the field of data transport, congestion notification is a well-known technique in relation to data transport techniques. The prototypical example is ECN (Explicit Congestion Notification), which usually operates in conjunction with Transmission Control Protocol (TCP), and may also operate with other transport protocols such as User Datagram Protocol (UDP) and Stream Control Transmission Protocol (SCTP).

The Explicit Congestion Notification (ECN) field is a known field in the Internet Protocol (IP) header of packets that can be used - by a router on an end-to-end path from a sender to a receiver - to send a signal (called an "ECN flag", which is one of the codepoints to which the ECN field can be set) to a receiver that a packet has encountered network congestion on the end-to-end path. This allows the receiver to signal back to the sender (via a field in the TCP header) that the packets it is sending are encountering (and are therefore likely to be adding to) congestion at one or more routers on the path to that receiver. This in turn allows or encourages the sender to lower its sending rate in order to alleviate that congestion.

In order to use ECN, a sender sets a field in the IP header to indicate to routers that receive (and then, generally forward) the packet in question that the sender-receiver connection is ECN-capable. A router may "ECN-mark" (or "congestion-mark") a packet by re-setting this field to a codepoint referred to as "CE", or "congestion experienced". It does so if it (i.e. the router in question) is congested, meaning that it has a shortage of forwarding capacity (i.e. measured in bits per second or otherwise) on one or more of its onward links, this generally being detected by the associated queue growing beyond a particular length.

It is also possible to have an Active Queue Management (AQM) algorithm; by operating an internal "virtual queue" set to have a slightly lower (virtual) "capacity" than the real queue, a router can start ECN-marking packets before there is any growth in the real queue but in conditions where a small increase in traffic would result in a real queue developing. Typically a router marks packets with a probability that increases as the queue grows (on the grounds that such growth puts the forwarding capacity in question in greater danger of being exhausted). The eventual receiver detects the CE marks in packets it receives and sets an ECN-ECHO field accordingly in the TCP header of the TCP acknowledgements ("ACKs") in question. The sender of the original packets should receive these TCP "ACKs" and detect that their ECN-ECHO fields have been set, and as a result, should slow down the rate at which it sends traffic on the route (or at least to the receiver) concerned.

As it is a standardised field, the ECN flag should not cause packets to be rejected by routers or other network hardware - even if packets are forwarded or otherwise processed by routers or other network hardware entities that are not ECN-capable themselves, they should be configured simply to ignore the ECN field, whether the flag has been set or not.

Various multipath transport protocols exist, such as Multipath TCP (MPTCP). MPTCP spreads a connection over multiple sub-flows; the sub-flows typically take different paths, though this isn't required. A sending node can use congestion information from the different sub-flows to load balance, allowing it to send more traffic over less congested path(s).

There are various issues with this, including path management in situations where at least one of the end hosts has more than one IP address. An end host on both fixed and mobile broadband has an IP address from each network, for instance. The network used therefore depends on which IP address is selected, however it is not guaranteed that using a different IP address means the route is different.

A TCP end host with a single path has a default way of reacting to an ECN mark (it reduces the rate at which it sends packets, in fact reacting as though the packet was lost). A multipath transport protocol can also be used in conjunction with ECN. If a sender gets an ECN-ECHO, then instead of slowing down its sending, another possibility is to load balance between the paths such that the path with lower congestion carries more of the traffic.

Such splitting over multiple paths can be done at other layers of the protocol stack, such as the network layer, sub-network layer (e.g. radio), or a higher layer (e.g. specific applications). Referring to prior patent publications United States patent US8923115 (Pelletier) discusses a mobile station that sets the ECN field of packet(s) to congestion-experienced (or alternatively it set the ECN-ECHO field) when short of processing, memory or battery resources. The base station, even though it is not the endpoint of the TCP connection, monitors the traffic and reacts by slowing down the rate at which it sends downstream traffic destined for the mobile station.

US patent application US2011138053 (Khan et al) relates to relates to servers determining availability of resources and sending messages including availability status of resources to receiving clients using (for example) the SIP header. It proposes that receiving clients might implement a load distribution function based on received availability information.

US patent application US2014173092 (Uluderya et al) relates to techniques that involve throttling, routing and/or load balancing incoming requests based on client and server health information which is exchanged through headers, and to blocking requests determined to be "bot" requests.

US patent application US2012084419 (Kannan et al) relates to systems and methods for balancing servers based on server load status" which involve sending service requests to a server to indicate that the server is available to process the next service request.

### Summary of the Invention

According to a first aspect of the invention, there is provided a method of allocating processing requests between servers, each of said processing requests being a request from a client processor for processing to be performed by a server, the processing requests being submitted via a load-balancing module configured to forward the processing requests to a selected one of the servers, the method comprising:
at each of a plurality of servers, receiving processing requests submitted by client processors via said load-balancing module, processing said processing requests and sending processing responses to a load-monitoring module associated with said load-balancing module, the respective processing responses sent by respective servers to the load-monitoring module comprising header portions having a predetermined field configured to carry one of a plurality of codepoints each having a predetermined meaning according to an existing communications protocol;
at the load-monitoring module, identifying the codepoints in the predetermined fields of respective processing responses received from the respective servers and interpreting them according to a server processing capacity signalling protocol different from the existing communications protocol; and
forwarding respective processing requests received from said client processors by said load-balancing module for processing at a selected one of the servers, the selection of a server to which to forward a processing request being made in dependence on the interpretation according to the server processing capacity signalling protocol of the codepoints identified at the load-monitoring module in the predetermined fields of processing responses received from the respective servers;
the respective servers being configured to update a measure of their capacity to perform processing in respect of received processing requests, and to set one or more codepoints in the predetermined fields of respective processing responses sent to the load-monitoring module in accordance with the server processing capacity signalling protocol and in dependence on their respective processing capacity measures.

According to preferred embodiments, the respective processing responses may comprise a plurality of data units at least one of which has a header portion having said predetermined field configured to carry one of a plurality of codepoints.

According to preferred embodiments, the predetermined meaning of the codepoints according to the existing communications protocol may be a predetermined meaning indicative of a network condition.

According to preferred embodiments, the predetermined field may be a field configured to be updatable according to the existing communications protocol by an entity on a path from the respective server to the load-monitoring module.

According to preferred embodiments, the predetermined field may be a network congestion notification field. This may be configured to carry one of a plurality of codepoints each indicative of a level of network congestion experienced on a path between the respective server and the load-monitoring module. The load-monitoring module may then be configured to identify the codepoints in the network congestion notification fields of processing responses received from the respective servers. Preferably, where the responses comprise IP packets, the network congestion notification field is the Explicit Congestion Notification (ECN) field in the IP header.

According to preferred embodiments, the load-monitoring module may be configured to forward respective processing responses received from said servers in response to respective processing requests submitted by said client processor on to the client processor from which the processing request was submitted.

According to preferred embodiments, the load balancer and load monitor may be components of a combined load module.

According to preferred embodiments, a processing request submitted by a client processor may traverse a network comprising one or more network nodes between the client processor and the load-balancing module and/or may traverse a network comprising one or more network nodes between the load-balancing module and the server selected for processing of said processing request.

According to preferred embodiments, a processing response sent by a server may traverse a network comprising one or more network nodes between the server and the load-monitoring module and/or may traverse a network comprising one or more network nodes between the load-monitoring module and a receiving client.

According to preferred embodiments, one or more of the servers may be a virtual machine implemented on a computing device.

According to preferred embodiments, the method further comprises:
sending reference responses from the respective servers to the load-monitoring module, respective reference responses comprising header portions having said predetermined field, the fields in the reference responses being set by the respective servers to a predetermined reference codepoint; and
at the load-monitoring module, identifying the codepoints in the predetermined fields of respective reference responses received from the respective servers;
wherein the selection of a server to which to forward a processing request is made in dependence on a comparison of the codepoints identified in the predetermined fields of processing responses and of reference responses received from the respective servers.

According to a second aspect of the invention, there is provided apparatus for allocating processing requests between a plurality of servers, each of said processing requests being a request from a client processor for processing to be performed by a server, the apparatus comprising a load-balancing module via which said processing requests are submitted to be forwarded to a selected one of said servers, and a load-monitoring module associated with said load-balancing module, each of said servers being configured to receive processing requests submitted by client processors via said load-balancing module, process said processing requests and send processing responses to said load-monitoring module, the respective processing responses sent by respective servers to the load-monitoring module comprising header portions having a predetermined field configured to carry one of a plurality of codepoints each having a predetermined meaning according to an existing communications protocol, the respective servers being configured to update a measure of their capacity to perform processing in respect of received processing requests, and to set one or more codepoints in the predetermined fields of respective processing responses sent to the load-monitoring module in accordance with a server processing capacity signalling protocol different from the existing communications protocol and in dependence on their respective processing capacity measures;
the load-monitoring module being configured to receive processing responses from said servers and to identify the codepoints in the predetermined fields of respective processing responses received from the respective servers and to interpret them according to the server processing capacity signalling protocol; and
the load-balancing module being configured to receive processing requests submitted by client processors and to forward respective processing requests received from said client processors for processing at a selected one of the servers, the selection of a server to which to forward a processing request being made in dependence on the interpretation according to the server processing capacity signalling protocol of the codepoints identified at the load-monitoring module in the predetermined fields of processing responses previously received from the respective servers.

According to preferred embodiments of the second aspect, the apparatus further comprises said servers.

The various options and preferred embodiments referred to above in relation to the first aspect are also applicable in relation to the second aspect.

Preferred embodiments of the invention involve "re-use" of a network congestion notification field such as the ECN field (or possibly another appropriate field that is standardised for and/or is normally used for another purpose) to allow load-balancing between servers processing requests from clients, the load-balancing being managed by a module via which client requests are received which forwards the client requests on to respective servers. The servers use the chosen field to signal to the load-balancing module (or an associated load-monitoring module, which may be a part thereof) their current capacity to handle processing requests, enabling the load-balancing module to allocate subsequent requests to the servers in dependence on their current capacity. As the flag or field used by the servers to signal their current capacity has an existing use, it is recognised by routers, middle-boxes, and other network hardware, so will be passed through the network to the load-balancing module without interference.

Preferred embodiments of the above also involve further monitoring being performed by the load-balancing module (or the associated load-monitoring module) to establish whether a proportion of the packets received with flags set have in fact had those flags set by routers on the path between the servers and the load-balancing module using that field for its original use (e.g. to signal that they are experiencing congestion), rather than having been set by the servers concerned to send a signal indicative of their capacity to handle processing requests. To enable this further monitoring, traffic is sent over a "reference" connection parallel to or equivalent to the connection used for actual traffic being sent by the servers to the load-balancing module. Traffic on the reference connection is sent with the flags not set. It is assumed that a similar proportion of traffic will have its ECN field set to "congestion experienced" for the reference connection as for the connection used for the actual traffic. The load-balancing module is then able to compare results from the actual connection with those from the parallel "reference" connection, and base its load-balancing decisions on the results of the comparison.

### Brief Description of the Drawings

A preferred embodiment of the present invention will now be described with reference to the appended drawings, in which:
Figure 1 indicates a sequence of stages that may occur when an embodiment of the invention is used in relation to a simple scenario;
**Figures 2****,** **3** **and** **4** illustrate the various entities, connections and interactions that may be involved in methods according to embodiments of the invention in relation to different network scenarios;
**Figure 5** illustrates processes that may be performed respectively by a load balancer and by a load monitor, as well as interactions that may occur between them when performing a method according to an embodiment of the invention;
**Figure 6** illustrates steps that may be performed by each of a number of servers interacting with a load module involved in a method according to an embodiment of the invention;
**Figure 7** indicates a sequence of stages that may occur when an embodiment of the invention is used in relation to a scenario in which a load module is at a network location remote from that of its associated processing servers;
**Figure 8** illustrates the various entities, connections and interactions that may be involved in a method according to an embodiment of the invention in a scenario where a load balancer is located in a network near its associated processing servers and where a load monitor is located in the network near its requesting clients; and
**Figure 9** illustrates steps that may be performed by a load module involved in a method according to an embodiment of the invention in scenarios such as those described with reference to **Figures 7** **and** **8****.**

### Description of Preferred Embodiments of the Invention

With reference to the accompanying figures, methods and apparatus according to preferred embodiments will be described.

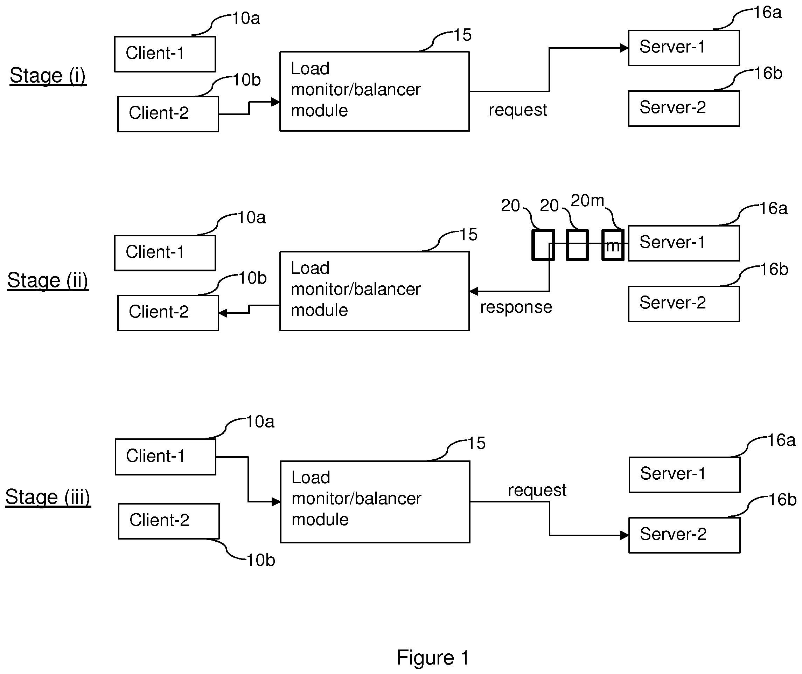

Firstly, with reference to **Figure 1****,** this indicates in simplified form a sequence of stages that may occur when an embodiment of the invention is used in relation to a simple scenario. How this sequence may be controlled will be explained later.

In the scenario of **Figure 1****,** two client computers, Client-1, 10a and Client-2, 10b are shown, each of which may submit processing or transaction requests. Requests submitted by either are intercepted by a Load Monitor/Load Balancer Module 15, which will be referred to in this explanation simply as a Load Module 15, although it will be appreciated that the respective functions of load monitoring and load balancing may be separated, and need not be performed within a single module or at the same (geographical or topological) network location. The Load Module 15 acts for plural servers, two of which are shown, Server-1, 16a and Server-2, 16b. Each of the servers 16 can potentially handle processing or transaction requests submitted via Load Module 15 from each of the clients 10, with the Load Module 15 allocating requests to servers based on its knowledge of the available resources of each server (and possibly based on other factors as well). In this regard, the scenario described appears equivalent to a standard load balancing scenario.

Server resources involved in handling requests typically include computer processing power or capacity and memory, but other constrained resources may be involved and taken into account instead of or as well as these.

In stage (i) of **Figure 1****,** a request from Client-2, 10b has been directed across the network to Load Module 15 and on across the network to Server-1, 16a for processing. As will be appreciated, Load Module 15 uses a dynamic load balancing algorithm, i.e. one that takes account of actual conditions in respect of the various servers.

In stage (ii), Server-1, 16a is sending a response back across the network towards Client-2, 10b via Load Module 15. The response comprises one or more data packets (or other such data units) 20. If the server is short of a resource, it signals this to the Load Module 15 by marking at least one of the data units 20m with a mark "m". For the mark "m", the server sets a mark or flag in an existing field in a header portion of the data unit, such as an ECN-mark, an ECN-Echo flag or another congestion mark. As the flag or field has an existing use, it will be recognised by routers, middle-boxes, and other network hardware, so will be passed through the network and reach Load Module 15 without the data unit being dropped and without interference, but it will be appreciated that while such a mark would normally be set in a packet received by an intermediate node on the path such as a router to indicate that the router is experiencing network congestion, in this case, it is instead set in a data unit by a processing server 16 which is the original sender of the data unit (rather than a "forwarding node" on the path that data unit then takes), and it is set in order to signal "busy-ness" of the server in question, or a shortage of a particular processing resource, or another such indicator of the capacity of the server in question to perform processing in respect of received processing requests. It is not set to indicate that any router or other such network node is experiencing network congestion.

The load monitoring part of Load Module 15 inspects traffic from each server, updating a count indicating how busy each server is, or to what extent each is using up its available amount of a particular resource. It therefore updates its records to show that Server-1, 16a is currently signalling that it is busy. The Load Module 15 preferably removes the "busy-ness" mark before sending the data unit (and others making up the response) on to Client-2, 10b as the mark was not applied for the usual purpose of signalling congestion at a router or other node on a network path to other routers or nodes downstream on the path, so need not signal such congestion to any subsequent node. The Load Module 15 itself uses the information gained from the presence of the mark to inform its load balancing algorithm.

In stage (iii), a subsequent request has been intercepted by Load Module 15, this time from Client-1, 10a, and has been directed to Server-2, 16b for processing, this server being chosen by the load balancing part of Load Module 15 since Server-1 is now known to be busy, based on the mark applied to its previous response to a request from Client-2, 10b.

In relation to the above, a server that is running short of resources (e.g. processing, memory, etc.) preferably notifies the Load Module 15 by marking one or more data units in responses before it actually runs out of the resource(s) in question, in order to leave a "safety margin" (for example, so that the current request can be handled, and perhaps so that new requests from one of the current clients can be handled by the same server without having to transfer application-specific and/or client-specific state to an alternative server). Each server may be configured to determine at what level of resource usage to send a signal, or when it is in danger of becoming too busy. For instance, the relative importance assigned to different types of internal resources (memory, processing, etc.), and the acceptable level of risk (e.g. how close the resource can get to being exhausted before marking starts) may be configured separately for each server. Similarly, how rapidly to increase the probability of marking for increasing levels of resource shortage may be configured separately for each server.

In using information from the respective servers to determine how busy each server is and using this to inform its load-balancing algorithm, the Load Module 15 may allocate the next request to the server from which it least recently received a marked data unit. Alternatively it could keep a running average of the fraction of marked data units for each server and forward a request to the one with the lowest fraction - the running average could be calculated so that old marks would be "timed-out", or would have a decreasing influence with age (using an exponentially-weighted moving average, for example).

The chosen algorithm could be used in combination with other information, for example some types of request may be best handled by a particular server or sub-set of servers (which may be specialised for tasks that involve a particular type of processing, for example encryption, decryption or image processing).

In some circumstances the Load Module 15 may be able to trigger the creation/use of a new server in response to an overall shortage of capacity across the existing servers, for example where the servers are Virtual Machines (VMs), or where servers are shared with or can be "borrowed from" other load modules.

A server may occasionally add a mark even when it doesn't need to signal that it is busy, in order to act as a 'health monitor', for example.

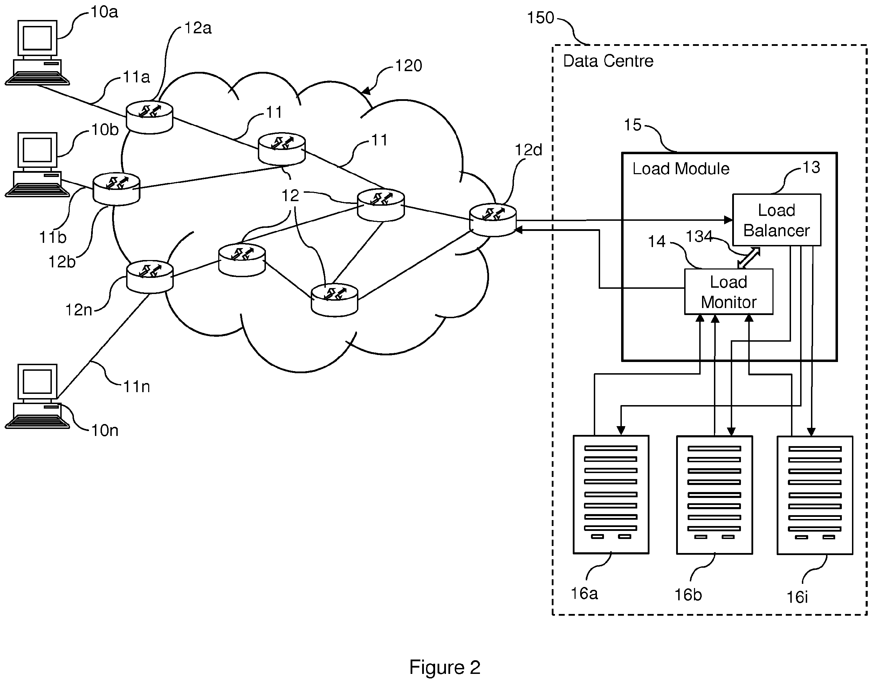

Referring now to **Figures 2****,** **3** **and** **4****,** these illustrate the various entities, connections and interactions that may be involved in methods according to embodiments of the invention in relation to three different network scenarios. In each of these, requesting client computers 10a, 10b, ..., 10n are shown, the respective client computers having respective links 11 a, 11b, ..., 11n to respective edge routers or other network nodes 12a, 12b, ..., 12n in a network 120. These are connected by further links 11 via further routers/nodes 12 within the network 120 to a load balancer 13, via its edge node 12d. The load balancer 13 may be part of a load module 15 and/or may be within a data centre 150 which also contains processing servers, but need not be located with or in either, as will be explained below. Similarly a load monitor 14 may be part of the same load module 15 and/or may be within the same data centre 150 as the load balancer 13, as will be explained below.

Requests submitted by any of the requesting computers 10 are thus passed to the load balancer 13, which allocates each received request to one of a number of processing servers 16a, 16b, ..., 16i for which it acts. Responses from these pass via a load monitor 14 (which, like the load balancer 13, may be part of a load module 15 and/or may be within a data centre 150 which also contains the processing servers, but need not be located with or in either), which monitors the predetermined fields in headers of data units of respective processing responses from the respective servers in order to determine whether any server is currently signalling that its processing capacity (or availability of another such resource) is currently being fully or nearly used, and feedback indicative of information obtained therefrom (indicated by the arrow 134) is provided to the load balancer in order that it can take load-balancing decisions in respect of subsequent requests in dependence thereon. Meanwhile, the responses are forwarded to their intended recipients.

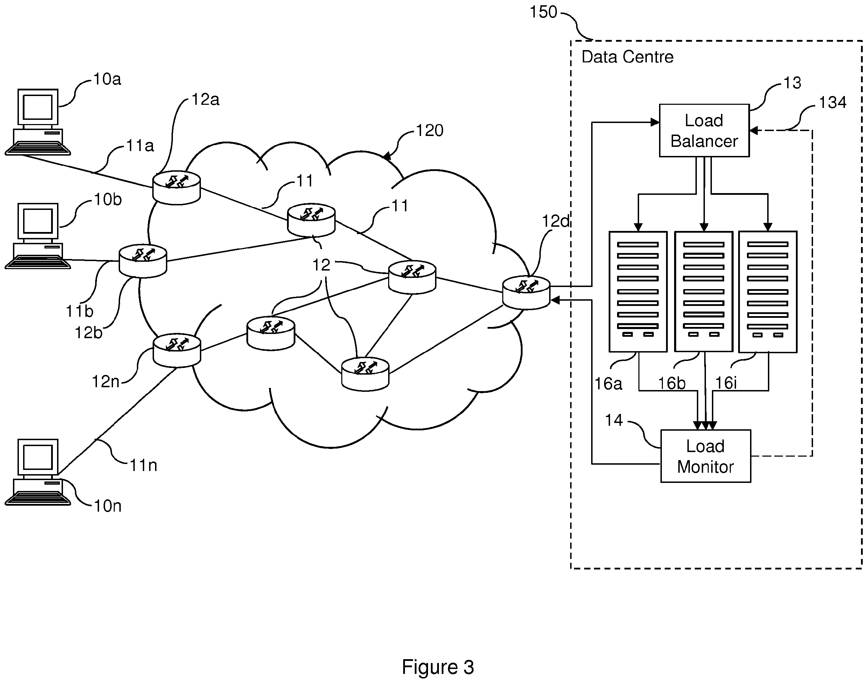

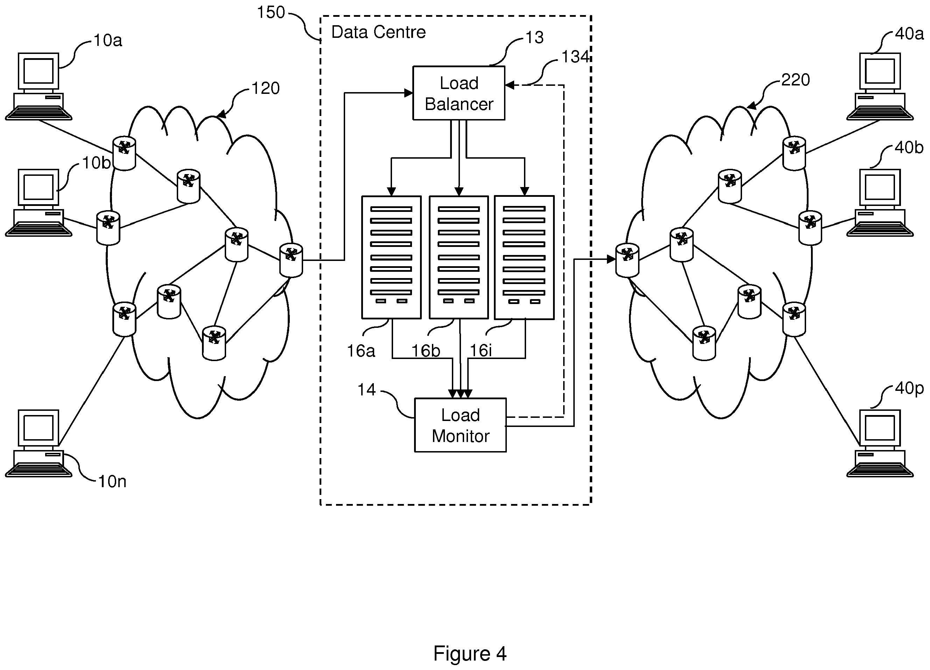

In the scenarios of **Figures 2** **and** **3****,** the intended recipients of the responses are the requesting client computers 10a, 10b, ... 10n, so the responses may traverse the same or similar paths through the same network 120 as the requests, albeit in the opposite direction. In the scenario of **Figure 4****,** the intended receivers of the responses are receiving client computers 40a, 40b, ... 40p, which in the example of Figure 4 receive responses via a second network 220 as a result of requests submitted by requesting client computers 10a, 10b,...,10n via the first network 120. While this scenario may be less common than the scenarios of **Figures 2** **and** **3****,** it is intended to illustrate that the paths taken by responses to requests need not be the same as or similar to the reverse of the paths taken by their associated requests, and need not even traverse the same networks. (The "return" network need not be a different network, however - it is illustrated as such in **Figure 4** as a way of indicating clearly that the responses need not be sent to the entities from which the associated requests were sent.)

In the scenario of **Figure 2****,** the load balancer 13 and the load monitor 14 are co-located in a load module 15, which may be housed in a Data Centre 150 also containing the processing servers 16a, 16b,..., 16i for which it acts, but the load module 15 may be separate or remote from the processing servers.

It will be appreciated particularly with reference to the scenarios of **Figures 3** **and** **4** that the load balancer 13 and the load monitor 14 need not be part of a common load module 15 (as they are in the scenarios of **Figure 2****),** and need not be in a Data Centre 150, or at the same (geographical or topological) network location as each other at all. In **Figure 3** (as with **Figure 2****),** while the responses return to the network 120 via the same edge node 12d as that from which they arrived, they need not return via the same edge node, and would not generally do so unless the load balancer 13 and the load monitor 14 are located near each other (geographically or topologically). In **Figure 4****,** while fewer reference numerals have been included in order to avoid the figure becoming unnecessarily crowded, it will be appreciated that response are shown being forwarded via a different edge node and via a different network path (and possibly a different network) to the "receiving" clients 40.

It will be appreciated that in scenarios such as those of **Figures 2** **and** **3****,** the load balancer 13 and/or the load monitor 14 may in fact be located with (or on the same side of the network 120 as) the requesting client computers (and intended receivers of responses) 10, rather than being on the same side of the network 120 as the servers 16. Similarly, in a scenario such as that of **Figure 4****,** the load balancer 13 may be located with (or on the same side of the network 120 as) the requesting client computers 10, and/or the load monitor 14 may in fact be located with (or on the same side of the network 220 as) the intended receivers of responses 40, rather than being on the same side of the respective networks 120 and 220 as the servers 16. Such embodiments are generally only likely to be applicable in situations where a single client may generate a sufficiently large number of requests itself for its own transactions to be performed on remote servers to justify the costs of the load balancing and/or the load monitoring being performed locally, and may lead to less accurate load-monitoring, for reasons outlined below.

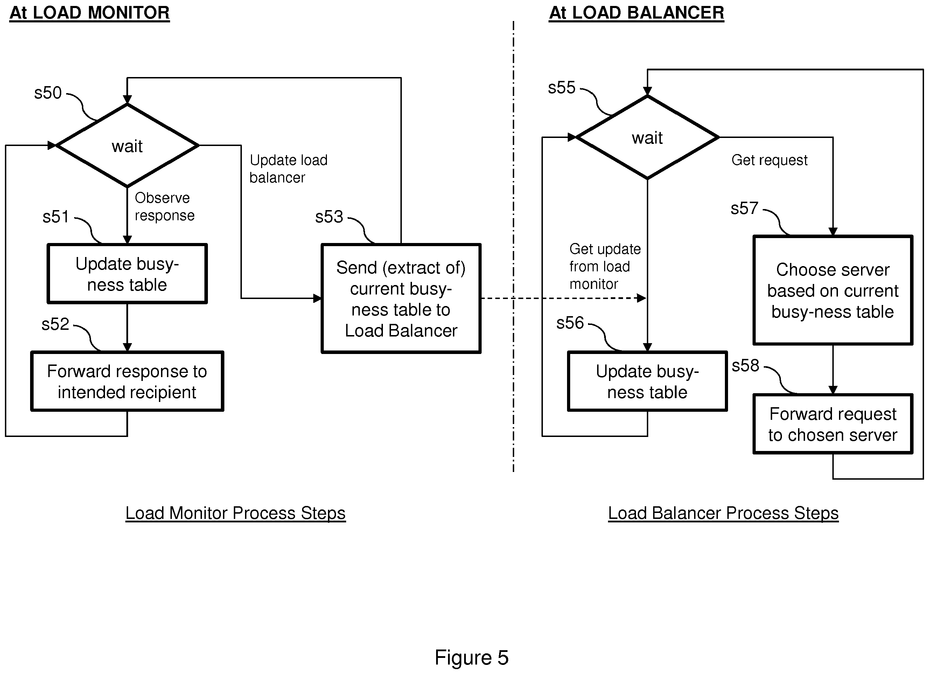

Referring now to **Figure 5****,** this illustrates the processes that may be performed respectively by the load balancer 13 and the load monitor 14, as well as the interactions that may occur between the load balancer 13 and the load monitor 14, when performing a method according to a preferred embodiment. The respective processes are each represented as a pair of subroutines which may repeatedly be performed concurrently or at different times. Each will be described as starting from a "wait" step, but it will be appreciated that there would in general be an "initialisation step" for each process which may need to be repeated occasionally prior to ongoing processing or in response to system reconfigurations. The initiation steps may include the creation of an initial or default "busy-ness" table with a list of servers with which the load balancer 13 and load monitor 14 are associated (which may all initially assumed not to be busy). There may be separate sub-routine for taking account of a new server being added (so requests can start being sent to it) or an existing server being removed (so requests can stop being sent to it), which may involve a management message.

The left-hand side of **Figure 5** illustrates the process steps that may be performed by the load monitor 14. Starting at step s50, load monitor 14 waits for responses from its associated servers. On observing a response, it identifies (generally from the header(s) of one or more packets forming a part thereof) which server has sent the response, and whether or not the chosen field in the header(s) has been marked (e.g. to indicate that the server is busy). In dependence thereon, the load monitor 14 updates a table of how busy each of the servers is (step s51). This could be a full record of all marks received, an exponentially-weighted moving average, the times of the last ten "busy-marks" for each server, or a record of another type. The table may be updated to decrease the "busy-ness" of each server according to a pre-determined algorithm in order to gradually reduce the level of "busy-ness" of each server in the absence of further marks. The load monitor 14 may decrease the level of "busy-ness" of each server in a pre-set manner (by 10% every 10 seconds, for example).

At step s52, the response is forwarded to the intended recipient. It will be noted that steps s51 and s52 can be done in either order or in parallel. It is preferred that updating the "busy-ness" table doesn't impact the latency of forwarding the response (by the node with the load monitor). After steps s51 and s52 have been performed in respect of an observed response, the process returns to step s50.

At times that may be determined in various different ways (as will be explained), the load monitor 14 sends the current "busy-ness" table (or an extract thereof) to the load balancer 13. The current "busy-ness" table could simply be sent at regular intervals. Alternatively, it could be sent each time a response is observed and the table is updated, although this may involve unnecessarily frequent exchanges, so may only be appropriate if the load monitor 14 and load balancer 13 are co-located in the same node. In other cases, it may be preferred to send the table at times when a server passes a critical threshold, meaning that it becomes important for it to avoid having to process further requests. Correspondingly, the table may also be sent when a server that was busy is deemed to have becomes "quiet" again (through a lack of marks from it, for example). The "quiet" threshold may be set at a lower level than the "critical" threshold in order to reduce the possibility of adverse effects from hysteresis. Additionally, the table may be sent by management intervention (when a server is being taken down for maintenance, for example). Another option is that the table may be sent when requested by the load balancer 13, which may request it when it receives a certain number of requests, or when it has re-booted, for example.

While it may be appropriate to send the full table in some circumstances (if the load balancer 13 indicates that it has re-booted, for example), the complete table need not be sent each time. Extracts or short updates may be sent, indicating just any changes since last update, or that there are "No current issues", for example. Other possibilities include the following:
- Just the details of the servers that are currently the most busy (or which have the lowest remaining capacity, or level of a particular processing resource)
- Just the details of the servers currently above a threshold value of "busy-ness" (or below a "remaining capacity" threshold, or a threshold in respect of a particular processing resource) As an alternative, the load monitor 14 could be configured to provide a report or update to the load balancer 13 every 10th unmarked response and every marked response, for example. Other options and combinations of options are also possible.

The right-hand side of **Figure 5** illustrates the process steps that may be performed by the load balancer 13. Starting at step s55, load balancer 13 waits for updates from its associated load monitor 14, and for processing requests from the requesting client computers 10.

On receiving an update from the load monitor 14, the load balancer 13 updates its "busy-ness" table in dependence thereon (step s56) then returns to waiting (step s55).

In response to interception/receipt of a processing request from one of the requesting client computers 10, the load balancer 13 chooses one of the servers 16 to process and response to the request based on the current state of the "busy-ness" table (step s57). The choice of server could be made in one or more of the following ways:
- The choice could be from the servers that the "busy-ness" table indicates are completely quiet (or if none, from those similarly least busy). If two or more are indicated as being equally busy, the choice between them could be random, round robin etc.
- The choice could be randomly from all the servers, but with a weighting based on how busy the table indicates them to be.
- The choice could be biased by when the last request was sent to each server (favouring servers that haven't been sent a recent request, for example).
- The choice could be biased by the type of request and the capability of each server (i.e. some servers may be optimised for certain types of request, e.g. those that involve video processing).
- The choice could be to reject the request, because all the servers has too busy.

Having made the choice, the load balancer 13 then forwards the request to the chosen server (step s58) then returns to waiting (step s55).

In some situations, the load balancer 13 may need to take action to avoid a server never being used because it was once busy. This could be addressed by the load balancer sending an occasional request even to servers that are recorded as being busy, in order to give them a chance to send a response without a mark, thereby signalling that they are not busy.

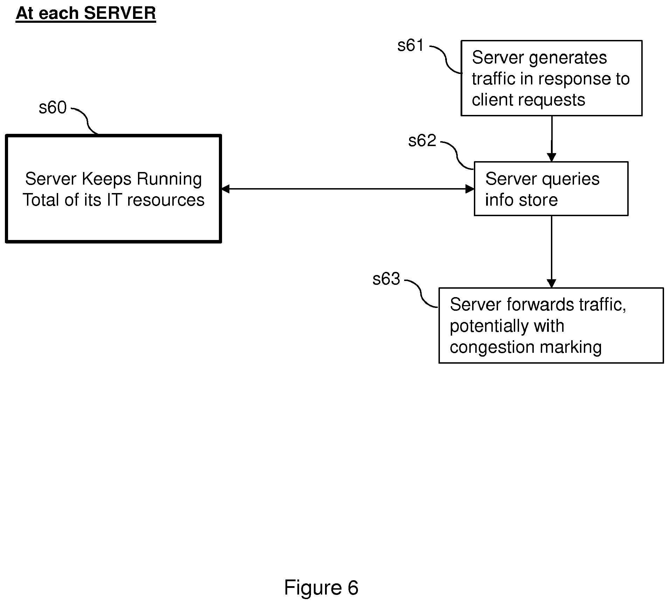

**Figure 6** illustrates the steps that may be performed by each of the associated servers 16 in order to interact with a load module 15 such as that in **Figures 2** **or** **3** (i.e. comprising a load balancer 13 and a load monitor 14).

Referring to **Figure 6****,** at step s60, each server monitors and keeps records in respect of its own available resources (i.e. processing power, memory, etc.). In response to client requests that have been allocated to it by the load module, a server generates traffic in the form of responses (step s61). The server queries its records in respect of its available resources in order to determine whether it needs to signal that it is busy, or has reached a particular "busy-ness" threshold (step s62). If so, it "busy-ness marks" the response by setting the predetermined flag in the header of one or more packets of the response, causes its records in respect of its own resources to be updated (step s60), and sends the response to the load module (for onward forwarding to the intended recipient) with the "busy-ness" mark (step s63). If not, it sends the response to the load module (for onward forwarding to the intended recipient) without a "busy-ness" mark (step s63).

### Other Embodiments

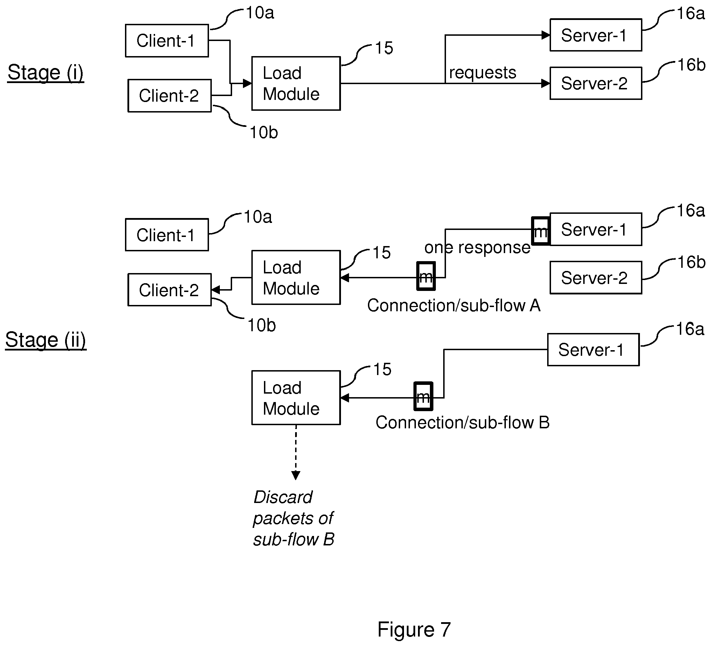

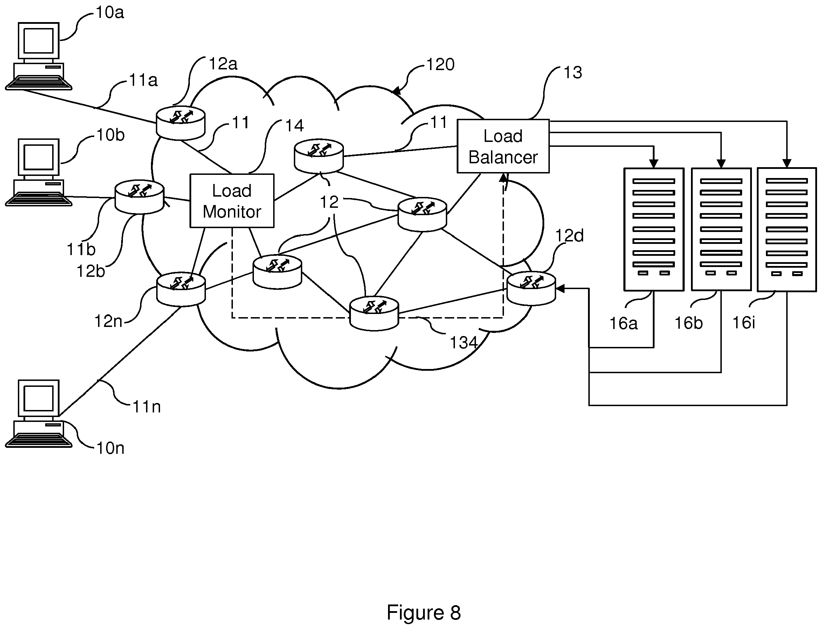

The embodiments above have generally been described in relation to a scenario in which the load balancer 13 and load monitor 14 are component parts of a load module 15 and/or are located within a data centre 150 which also contains the processing servers 16. As indicated earlier, the load balancer 13 and load monitor 14 need not be located together, or together with the associated servers (i.e. in a data centre or otherwise) - there may be a number of network nodes between them via which requests may need to travel between the load balancer 13 and the processing servers 16, and via which responses may need to travel between the processing servers 16 and the load monitor 14. In such embodiments, it will be appreciated that the benefit of the processing servers 16 "re-using" a header field having an existing meaning (a network congestion notification field such as the ECN field, for example) for the new purpose proposed above may be amplified, since the responses from the processing servers may need to pass through a number of routers, middle-boxes, or other network nodes, each of which might have dropped or otherwise interfered with responses having any unrecognised header fields. It will be appreciated, however, that if there are routers, middle-boxes, or other network nodes between the processing servers 16 and the load monitor 14, signals sent from processing servers 16 by "re-using" a header field having an existing meaning such as the ECN field may have those signals updated by those routers, middle-boxes or other network nodes using the field for its normal, existing purpose, before those signals reach the load monitor 14. While the load monitor 14 would generally be able to ascertain (e.g. from packet header information) the processing server from which a marked data unit has been sent, it would in general be unable to determine whether the mark was a congestion mark applied by a network node (to indicate that it is experiencing congestion) or a "busy-ness" mark set by the processing server in question (as an indicator that it is short of a resource). This may result in the load monitor 14 deriving inaccurate reports of the levels of busy-ness of the processing servers 16 in question. In view of such a possibility, preferred embodiments may make use of a further technique in order to mitigate such an effect on the signals being sent from the processing servers 16 to the load monitor 14. This will be described with reference to **Figures 7****,** **8** **and** **9****,** which relate to a scenario in which the load balancer 13 and/or the load monitor 14 need not be co-located, and either or both may be remote from the processing servers 16 - in the case of **Figure 8****,** for example, the load balancer 13 is located in the network 120 near the processing servers, while the load monitor 14 is located in the network 120 near the requesting clients 10.

Referring to **Figure 7****,** in which the load balancer 13 and load monitor 14 are components of a load module 15 located near the requesting clients 10, the overall process may proceed essentially as described with reference to **Figure 1****,** but as indicated above and as illustrated in **Figure 8****,** if the load monitor 14 is not co-located with the processing servers 16, responses travelling from the processing servers 16 may be congestion-marked by nodes 12 on their path through the network 120 before being inspected by the load monitor 14. In order to allow the load monitor 14 to estimate what amount of the marked data units it receives were "busy-ness-marked" by the processing servers 16 (or alternatively, what proportion of those data units were marked by the processing servers 16) to indicate that they are "busy", and for the estimated amount (or proportion) not to be inaccurate due to data units also possibly being congestion-marked by nodes on the path through the network (i.e. to indicate that those nodes are experiencing congestion), a separate "reference" connection or sub-flow (referred to as "B") is set up between the processing servers 16 and the load monitor 14. This should preferably follow the same path (or approximately the same path) as the "response" traffic itself (referred to as "A"). Servers then send occasional "dummy traffic" over this reference connection/sub-flow "B". A reference connection/sub-flow may be set up for each of the processing servers 16, but if the processing servers 16 are co-located, a single, shared reference sub-flow may be sufficient.

In response to requests submitted by clients 10 (as illustrated in Stage (i) of **Figure 7****),** responses are sent back towards the appropriate clients via Load Module 15, as explained earlier with reference to **Figure 1** (and as indicated by the upper part of Stage (ii) of **Figure 7****),** which shows sub-flow A. The load monitor 14 component of load module 15 receives this as well as data units in sub-flow "B" (illustrated in the lower part of Stage (ii) of **Figure 7****)** and inspects the data units in to determine the amount or proportion of them that carry congestion marks. The load monitor 14 does not need to forward the data units of sub-flow B, as they have been sent purely as a reference for the purposes of the monitoring, so the sub-flow B data units can be discarded once the degree of marking therein has been ascertained (as illustrated in the lower part of Stage (ii) in **Figure 7****).** The load monitor 14 "subtracts" the degree (e.g. amount or proportion) of marking on this "dummy traffic" from the degree of marking identified in the actual "response" traffic (i.e. that in connection/sub-flow "A"), in order to produce a more accurate estimate of the degree of busy-ness of each server.

The algorithm performed by the load module 15, calculated individually for each processing server 16, may be represented as:
Degree of ("busy-ness" + "congestion") marking on sub-flow A = f_A
Degree of ("congestion") marking on sub-flow B = f_B
=> Estimate of degree of ("congestion") marking by server on sub-flow A: f_A - f_B

As indicated earlier, the degree of marking may be obtained from the amount of marked data units, the proportion of marked data units, or from other measures of degree. It will be appreciated that f_A and f_B could be calculated as simple averages (e.g. fraction over the last t seconds, where t may be different for each), as smoothed averages (e.g. an exponentially weighted moving average), or obtained in other ways.

This more accurate estimate would preferably be re-calculated periodically. Alternatively, it could be re-calculated on the arrival of each packet received on each of A or B (whether marked or not), or when a transaction request is received from a client, for example.

On connection/sub-flow B, the server could address packets directly to the load monitor 14. However, it will be appreciated that connection/sub-flow "B" could be implicit. For example, the server could treat packets within a particular address range, or with a port number or header field set to a specific value as belonging to "B", whereas other traffic is treated as belonging to "A".

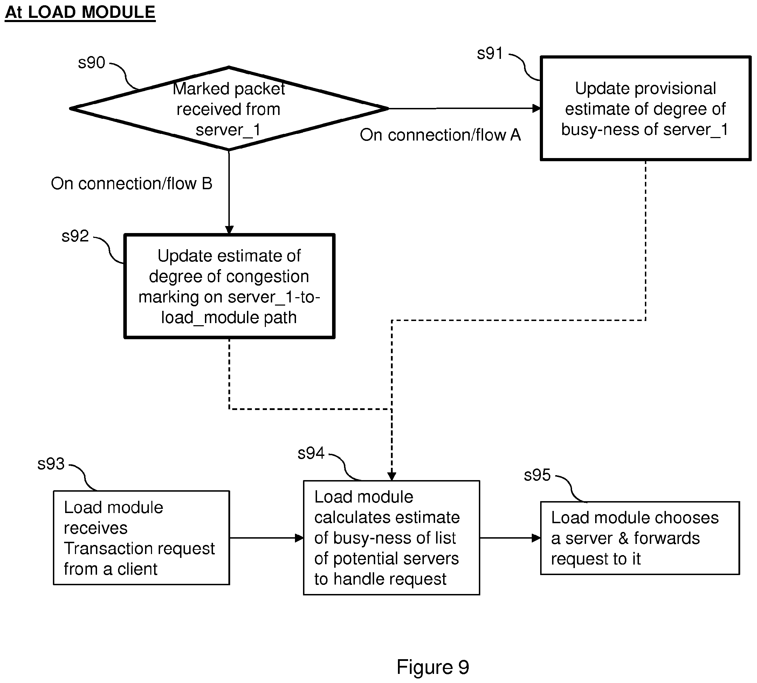

Referring to **Figure 9****,** this illustrates steps that may be performed by a load module 15 in relation to the method described with reference to **Figures 7** **and** **8****.** At step s90, in response to receipt of a response from one of its associated servers having a marked packet (in this case, server_1), the load module 15 determines whether the mark was in a packet received in connection/sub-flow "A" or "B". If the mark was in a packet received in connection/sub-flow "A", the load module 15 updates a "provisional" estimate of the degree of busy-ness of server_1 (step s91). If the mark was in a packet received in connection/sub-flow "B", the load module 15 updates its estimate of the degree of congestion marking happening due to actual congestion on the "server_1-to-load_module path" (step s92). By subtracting the latter (i.e. the "actual congestion" estimate) from the former (i.e. the "provisional" estimate of the degree of busy-ness), a more accurate measure for the degree of busy-ness of the processing server in question can be obtained.

In response to the load module receiving a subsequent transaction request from a client computer (step s93), the load module calculates a current estimate of busy-ness of each of the potential servers that are candidates to handle the request (step s94), then chooses a server and forwards the request to it (step s95).

### Further Options and Variants

One or more of the processing servers 16 may be specialised to deal with, or deal more efficiently with, certain types of request, for instance requests for video processing. The load balancer 13 may take such factors into account when deciding to which server to send particular types of processing request.

As indicated above, the "busy-ness" marking may utilise a known congestion field, which may be the ECN (which is in the IP layer header). Header fields other than known congestion fields may be used, however, such as the 'Identification', 'Flags' or 'Fragment Offset' fields in the IPv4 header, which were included in IPv4 in order to allow for packet fragmentation.

It may however be a congestion (or other) field of a header at a different layer in the protocol stack, such as the ECN-ECHO flag (which is in a TCP layer header), or be a header field at another layer in the protocol stack, for example at the application layer or at a lower layer.

Signalling of "busy-ness" by processing servers may be implicit, being signalled to the load monitor 14 by dropping data units that the load monitor would be expecting (and whose absence would there be identifiable). In this case the load monitor 14 needs to notice the implicit signal. For example, by monitoring a packet sequence number field, the load monitor 14 could identify 'gaps' in the sequence numbers of the monitored packets, which would correspond to dropped packets.

If it is required or desired to shut a particular processing server down, for maintenance, for example, it may be configured to apply "busy-ness" marks at a very high level even when not actually "busy" in order to avoid having new requests allocated to it, in order to clear its processing queue prior to the shut-down.

If the load monitor 14 identifies that one or more (or even all) of its associated processing servers 16 are busy, it may request the setting up of one or more additional processing servers 16, or request an increase in the processing capacity of the existing servers. A decision to request additional servers or capacity may be based on the degree of busy-ness, on how long or how frequently a certain level of busy-ness has occurred, on whether maintenance is scheduled, or on other factors. Such a request may be processed manually or automatically.

The embodiments above have been described with reference to load balancing between normal processing servers, each generally being a computer hardware item. The processing servers may in fact each be Virtual Machines, implemented on one or more actual computer hardware items. Each Virtual Machine may be configured (for logistical or other reasons) to have a certain amount of processing capacity. An advantage of this is that additional Virtual Machines can be instantiated if most or all of the existing capacity is being used.

The embodiments above have been described with reference to scenarios where load balancing is performed by one load module 15, or by one load balancer 13 and its associated load monitor 14. It will be appreciated that two or more such load modules 15 (or load balancers 13 and associated load monitors 14) may co-operate, acting together for resiliency or other reasons. In such cases, they may each operate the above approach independently, in respect of their respective sets of processing servers, but they may share "busy-ness" information, for example through a common information store or by keeping their information synchronised or cross-checked, and may distribute requests to each other or each other's processing servers if the capacity of their own processing servers is being used or is above a certain threshold.

The load monitor 14 may be replicated in order to provide redundancy. One possibility is that a shared load balancer 13 would receive updates of "busy-ness" tables from two or more load monitors 14 associated with the same or overlapping sets of processing servers. The load balancer 13 could combine these tables, for example with an average value of the busy-ness of each server. Similarly the load balancer 13 could be replicated, in which case a single load monitor 14 could inform one or more load balancers 14 about its busy-ness table.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example.

Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

It will be understood by those skilled in the art that, although the present invention has been described in relation to the above described example embodiments, the invention is not limited thereto and that there are many possible variations and modifications which fall within the scope of the invention.

## Claims

1. A method of allocating processing requests between servers, each of said processing requests being a request from a client processor for processing to be performed by a server, the processing requests being submitted via a load-balancing module configured to forward the processing requests to a selected one of the servers, the method comprising:
at each of a plurality of servers, receiving processing requests submitted by client processors via said load-balancing module, processing said processing requests and sending processing responses to a load-monitoring module associated with said load-balancing module, the respective processing responses sent by respective servers to the load-monitoring module comprising header portions having a predetermined field configured to carry one of a plurality of codepoints each having a predetermined meaning according to an existing communications protocol;
at the load-monitoring module, identifying the codepoints in the predetermined fields of respective processing responses received from the respective servers and interpreting them according to a server processing capacity signalling protocol different from the existing communications protocol; and
forwarding respective processing requests received from said client processors by said load-balancing module for processing at a selected one of the servers, the selection of a server to which to forward a processing request being made in dependence on the interpretation according to the server processing capacity signalling protocol of the codepoints identified at the load-monitoring module in the predetermined fields of processing responses received from the respective servers;
the respective servers being configured to update a measure of their capacity to perform processing in respect of received processing requests, and to set one or more codepoints in the predetermined fields of respective processing responses sent to the load-monitoring module in accordance with the server processing capacity signalling protocol and in dependence on their respective processing capacity measures.

2. A method according to Claim 1 wherein the respective processing responses comprise a plurality of data units at least one of which has a header portion having said predetermined field configured to carry one of a plurality of codepoints.

3. A method according to Claim 1 or 2 wherein the predetermined meaning of the codepoints according to the existing communications protocol is a predetermined meaning indicative of a network condition.

4. A method according to any of the preceding claims wherein the predetermined field is a field configured to be updatable according to the existing communications protocol by an entity on a path from the respective server to the load-monitoring module.

5. A method according to any of the preceding claims wherein the predetermined field is a network congestion notification field

6. A method according to Claim 5 wherein the network congestion notification field is configured to carry one of a plurality of codepoints each indicative of a level of network congestion experienced on a path between the respective server and the load-monitoring module; and wherein the load-monitoring module is configured to identify the codepoints in the network congestion notification fields of processing responses received from the respective servers.

7. A method according to Claim 5 or 6 wherein the network congestion notification field is the Explicit Congestion Notification (ECN) field in the IP header.

8. A method according to any of the preceding claims wherein the load-monitoring module is configured to forward respective processing responses received from said servers in response to respective processing requests submitted by said client processor on to the client processor from which the processing request was submitted.

9. A method according to any of the preceding claims wherein the load balancer and load monitor are components of a combined load module.

10. A method according to any of the preceding claims wherein a processing request submitted by a client processor traverses a network comprising one or more network nodes between the client processor and the load-balancing module and/or traverses a network comprising one or more network nodes between the load-balancing module and the server selected for processing of said processing request.

11. A method according to any of the preceding claims wherein a processing response sent by a server traverses a network comprising one or more network nodes between the server and the load-monitoring module and/or traverses a network comprising one or more network nodes between the load-monitoring module and a receiving client.

12. A method according to any of the preceding claims wherein one or more of the servers is a virtual machine implemented on a computing device.

13. A method according to any of the preceding claims, further comprising:
sending reference responses from the respective servers to the load-monitoring module, respective reference responses comprising header portions having said predetermined field, the fields in the reference responses being set by the respective servers to a predetermined reference codepoint; and
at the load-monitoring module, identifying the codepoints in the predetermined fields of respective reference responses received from the respective servers;
wherein the selection of a server to which to forward a processing request is made in dependence on a comparison of the codepoints identified in the predetermined fields of processing responses and of reference responses received from the respective servers.

14. Apparatus for allocating processing requests between a plurality of servers, each of said processing requests being a request from a client processor for processing to be performed by a server, the apparatus comprising a load-balancing module via which said processing requests are submitted to be forwarded to a selected one of said servers, and a load-monitoring module associated with said load-balancing module, each of said servers being configured to receive processing requests submitted by client processors via said load-balancing module, process said processing requests and send processing responses to said load-monitoring module, the respective processing responses sent by respective servers to the load-monitoring module comprising header portions having a predetermined field configured to carry one of a plurality of codepoints each having a predetermined meaning according to an existing communications protocol, the respective servers being configured to update a measure of their capacity to perform processing in respect of received processing requests, and to set one or more codepoints in the predetermined fields of respective processing responses sent to the load-monitoring module in accordance with a server processing capacity signalling protocol different from the existing communications protocol and in dependence on their respective processing capacity measures;
the load-monitoring module being configured to receive processing responses from said servers and to identify the codepoints in the predetermined fields of respective processing responses received from the respective servers and to interpret them according to the server processing capacity signalling protocol; and
the load-balancing module being configured to receive processing requests submitted by client processors and to forward respective processing requests received from said client processors for processing at a selected one of the servers, the selection of a server to which to forward a processing request being made in dependence on the interpretation according to the server processing capacity signalling protocol of the codepoints identified at the load-monitoring module in the predetermined fields of processing responses previously received from the respective servers.

15. Apparatus according to Claim 14, further comprising said servers.
